# FASCICULE DE BREVET EUROPEEN

(11) **EP 3 507 168 B1**
(45) Date de publication et mention de la délivrance du brevet: **31.03.2021**
(21) Numéro de dépôt: 17755543.0
(22) Date de dépôt: 28.08.2017
(51) Int. Cl.: B62B 7/06

(54) **CHÂSSIS PLIANT DE POUSSETTE POUR ENFANT, ET POUSSETTE CORRESPONDANTE**
ZUSAMMENKLAPPBARES KINDERWAGENGESTELL UND KINDERWAGEN
FOLDABLE STROLLER FRAME AND CORRESPONDING STROLLER

(30) Priorité: 02.09.2016 FR 1658208
(43) Date de publication de la demande: 10.07.2019
(73) Titulaire: Dorel France, 49309 Cholet Cedex (FR)
(72) Inventeur: CHENG, Hsin-Fu, Chiayi City, 600 (TW); ZWEIDECK, Bruno, 49300 Cholet (FR); WU, Tse-Chien, Kaohsiung City, 80249 (TW); CHENG, Huang-Yi, Chiayi County, 60859 (TW)
(74) Mandataire: Vidon Brevets & Stratégie
(86) Numéro de dépôt international: PCT/EP2017/071576
(87) Numéro de publication internationale: WO 2018/041793

(56) Documents cités:
- FR-A1- 2 989 661
- GB-A- 2 426 743
- US-A- 5 857 684
- US-A1- 2007 075 525

## Description

### 1. Domaine de l'invention

Le domaine de l'invention est celui de la puériculture. Plus précisément, l'invention concerne les poussettes, ou voitures d'enfant, et en particulier les mécanismes de pliage pour le châssis de telles poussettes.

### 2. L'art antérieur

On connaît déjà de nombreuses techniques de pliage de châssis de poussette.

D'une façon générale, on cherche notamment à concilier au moins certains des objectifs suivants :
- efficacité du pliage, l'encombrement de la poussette pliée devant être le plus réduit possible, de façon à faciliter son rangement, et son transport, par exemple dans un véhicule automobile ;
- simplicité des manipulations de pliage et dépliage, l'utilisateur devant pouvoir effectuer ces opérations avec un nombre réduit d'opérations, et chacune de ces opérations devant être le plus facile possible ;
- sécurité de l'enfant transporté et notamment contrôle du pliage (pour lutter contre un pliage non souhaité, en particulier en présence d'un enfant) ;
- simplicité et faible coût de la fabrication.

Il est en outre souhaitable, bien sûr, qu'en position dépliée, la poussette soit confortable et sûre pour l'enfant.

On connaît ainsi certaines poussettes à trois roues dont le principe de pliage est notamment présenté dans le document de brevet EP-1 466 810. Cette poussette comprend, dans un mode de réalisation particulier illustré sur les figures 5A à 10B de ce document, deux montants supérieurs, reliés à leur première extrémité à un guidon, ou barre. La deuxième extrémité de ces montants est solidaire d'un montant inférieur s'étendant depuis les montants avant vers les deux blocs de roues arrière en formant sensiblement un « X », le centre du « X » étant un nœud central d'articulation de la poussette. Le bloc de la roue avant est porté par une poutre centrale qui porte également le nœud central d'articulation. Le pliage de la poussette est obtenu par le pivotement, vers le bas, des montants avant entrainant ainsi le coulissement vers la roue avant du nœud central d'articulation sur la poutre centrale. Le déplacement du nœud provoque l'inclinaison des montants inférieurs vers l'avant de la poussette. Le dépliage de la poussette est obtenu en tirant vers le haut les montants avant.

Le principe de pliage de cette poussette est intéressant. Toutefois, la compacité de la poussette en position pliée, n'est pas optimale. En effet, son encombrement en largeur reste important, ce qui peut être problématique dans certaines situations.

Une technique permettant de rapprocher les roues arrière l'une de l'autre est décrite dans le document de brevet FR-2 989 661. Selon cette approche, une pièce est montée coulissante sur la poutre centrale, et son déplacement permet de contrôler le rapprochement, et respectivement l'éloignement, des roues arrière. Cependant, cette solution est peu aisée à mettre en œuvre en pratique.

Il existe, par conséquent, un besoin d'amélioration du pliage d'une telle poussette.

### 3. Objectifs de l'invention

L'invention a notamment pour objectif de pallier ces inconvénients de l'art antérieur.

Plus précisément, un objectif de l'invention est, selon au moins un mode de réalisation, de fournir un châssis de poussette dont le pliage est simple et efficace, en termes de compacité et de simplicité d'utilisation.

Ainsi, un objectif de l'invention est de fournir, selon au moins un mode de réalisation, un châssis de poussette qui offre une bonne compacité en position pliée, permettant notamment un transport et un rangement aisés.

L'invention a également pour objectif, selon au moins un mode de réalisation, de fournir un mécanisme de pliage qui soit simple à mettre en œuvre et robuste.

### 4. Caractéristiques essentielles de l'invention

Ces objectifs, ainsi que d'autres qui apparaîtront plus clairement par la suite, sont atteints à l'aide d'un châssis pliant de poussette pour enfant, comprenant :
- une partie supérieure présentant des moyens de réception d'une assise et des moyens de guidage de ladite poussette, ladite partie supérieure pouvant prendre une position de partie supérieure dépliée et une position de partie supérieure pliée, et
- une partie inférieure présentant une poutre centrale portant au moins une roue avant et deux roues arrière, dont les supports respectifs sont reliés chacun à ladite poutre centrale par un ensemble de deux bras parallèles, articulés sur ladite poutre centrale de façon à pouvoir prendre une position de roues arrière dépliée et une position de roues arrière pliée, dans laquelle lesdites roues arrière sont rapprochées de ladite poutre.

Selon l'invention, ce châssis comprend des premiers moyens de blocage du pliage de ladite partie inférieure, contrôlés par le pliage de ladite partie supérieure, de façon que le passage de la position de roues arrière dépliée à la position de roues arrière pliée ne soit possible que lorsque ladite partie supérieure est dans la position de partie supérieure pliée.

Ainsi, le pliage de la poussette s'effectue en deux temps : le pliage de la partie supérieure, puis le pliage de la partie inférieure (rapprochement des roues arrière). Le rapprochement des roues arrière n'est pas possible tant que le pliage de la partie supérieure n'est pas effectué, puisque les premiers moyens de blocage sont contrôlés par ce pliage : ils passent d'un état bloqué, ou verrouillé, à un état débloqué, ou déverrouillé, lorsque la partie supérieure passe de sa position dépliée à une position pliée.

Le pliage de la partie inférieure peut être optionnel, de façon à proposer deux modes de pliage, en fonction des besoins :
- un premier mode de pliage intermédiaire, dans lequel la partie supérieure du châssis est pliée et rapprochée de la partie inférieure ;
- un deuxième mode de pliage compact, et optionnel, dans lequel les roues arrière sont en outre rapprochées de la poutre centrale.

Ce pliage compact ne peut être effectué que lorsque le pliage intermédiaire a été effectué.

Des moyens spécifiques de commande, ou de déverrouillage, actionnés par l'utilisateur, sont alors prévus pour autoriser cette opération. Ainsi, une première commande permet un premier niveau de pliage, pour obtenir le mode de pliage intermédiaire. Ensuite, une deuxième action de déverrouillage est effectuée, par l'utilisateur, pour passer du pliage intermédiaire au pliage compact. En d'autres termes, le passage au pliage compact nécessite un double déverrouillage : un premier, obtenu par le passage à la position intermédiaire, et un second, effectué par l'utilisateur.

Selon un mode de réalisation particulier, ladite partie supérieure présente au moins un ensemble mobile en rotation autour d'un axe de rotation fixe par rapport à ladite poutre centrale, et contrôlant le déplacement en coulissement d'au moins une pièce mobile en coulissement le long de ladite poutre et coopérant avec au moins un premier desdits bras.

Selon un aspect particulier, ladite pièce mobile en coulissement peut porter un crochet, retenant un desdits bras et/ou une desdites roues arrière dans la position de roues arrière pliée.

Lesdits premiers moyens de blocage peuvent notamment comprendre un pion de verrouillage apte à s'opposer au déplacement d'un desdits bras, lorsque ladite partie supérieure est dans la position de partie supérieure dépliée.

Le déplacement dudit pion de verrouillage d'une position verrouillée à une position déverrouillée peut être contrôlée par la rotation d'une jambe de ladite partie supérieure. Par exemple, ladite jambe peut entraîner en déplacement un excentrique agissant sur ledit pion de verrouillage.

Selon un autre aspect particulier, au moins un desdits bras peut être de longueur variable. Notamment, ledit premier bras peut être constitué de deux éléments aptes à coulisser l'un par rapport à l'autre, le pliage et/ou le dépliage de la partie supérieure du châssis entraînant le coulissement des deux éléments l'un par rapport à l'autre.

Selon un mode de réalisation particulier, le châssis comprend des seconds moyens de blocage de la rotation d'un desdits bras, contrôlés par des moyens de déverrouillage actionnables par un utilisateur.

Notamment, lesdits seconds moyens de blocage peuvent comprendre un pêne monté sur ladite poutre, et coopérant avec une gâche formée sur ledit bras.

Selon une mise en œuvre particulière, ledit pêne est fixe, et ladite gâche coulisse à l'intérieur dudit bras.

Lesdits moyens de déverrouillage peuvent comprendre un bouton mobile monté sur ladite poutre. Ledit bouton peut notamment être accessible à l'arrière de ladite poutre.

Selon une mise en œuvre particulière, ledit bouton peut entrainer en déplacement un premier plan incliné coopérant avec un second plan incliné, complémentaire, solidaire de ladite gâche.

Enfin, l'invention concerne une poussette pour enfant comprenant un châssis pliant comme décrit précédemment et équipée d'au moins un dispositif de transport d'enfant monté sur la partie supérieure du châssis, tel qu'un hamac.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre, en perspective, une poussette selon un deuxième mode de réalisation de l'invention, en position dépliée ;
- la figure 2 illustre, en vue partielle, le mécanisme de pliage de la poussette de la figure 1 ;
- les figures 3A et 3B illustrent, une vue en perspective et une vue de dessus en coupe respectivement, de la poussette de la figure 1, dans une position dépliée ;
- les figures 4A et 4B illustrent, une vue en perspective et une vue de dessus en coupe respectivement, de la poussette de la figure 1, dans une position pliée ;
- les 5A à 5C sont des vues de côté de la poussette de la figure 1 au cours de son pliage/dépliage ; et
- les figures 6A et 6B sont des vues de dessus de la poussette de la figure 1, dans la position dépliée et dans la position pliée en mode compact respectivement ;
- les figures 7A et 7B illustrent les premiers moyens de blocage du pliage des roues arrière, selon un mode de réalisation, respectivement en position bloquée et débloquée ;
- les figures 8A et 8B illustrent le déplacement d'une pièce coulissante participant au déblocage des premiers moyens de blocage des figures 7A et 7B ;
- la figure 9 illustre le bouton de déverrouillage des deuxièmes moyens de blocage ;
- les figures 10A à 10C illustrent les deuxièmes moyens de blocage, respectivement en position bloquée, en position débloquée, roues arrière non repliées et en position débloquée, roues arrière repliées ;
- les figures 11A et 11B illustrent la poussette, vue de dessus, respectivement en position dépliée et en position pliée compacte ;
- la figure 12 présente une biellette de synchronisation / désynchronisation des pliages supérieur et inférieur.

### 6. Description détaillée d'un mode de réalisation de l'invention

### 6.1 Présentation générale

L'invention concerne donc un nouveau châssis de poussette présentant une nouvelle cinématique de pliage. Ce châssis, présentant une poutre centrale, peut notamment être un châssis de poussette à trois roues ou blocs de roues.

L'invention concerne également, bien sûr, les poussettes mettant en œuvre un tel châssis, et équipées d'un ou plusieurs dispositifs de transport d'enfant, tel qu'un hamac, amovible ou non. Pour faciliter la compréhension de l'invention, on décrit ci-après le châssis de poussette nu. L'homme du métier saura aisément équiper de façon classique un tel châssis d'un hamac, d'une nacelle ou d'une coque, ou un élément similaire, qu'il soit amovible (par exemple à l'aide d'éléments de liaison connus sous la marque *« Moduloclip* » développés par la Demanderesse), ou fixe, rigide ou souple, réglable au niveau du dossier et/ou de l'assise,...

Pour répondre aux problèmes de l'art antérieur mentionnés ci-dessus, et notamment à celui de la compacité optimale de la poussette suite au pliage, l'invention propose une cinématique de pliage permettant un rapprochement des roues arrière selon au moins deux axes, à savoir un rapprochement des roues arrière l'une par rapport à l'autre et vers la roue avant.

En outre, le pliage de la poussette peut combiner ce rapprochement des roues avec le rapprochement des portions inférieure et supérieure de la poussette. Notamment, le rapprochement des roues arrière peut être optionnel, de façon à proposer deux modes de pliage, en fonction des besoins :
- un premier mode de pliage intermédiaire, dans lequel la partie supérieure du châssis est pliée et rapprochée de la partie inférieure ;
- un deuxième mode de pliage compact, et optionnel, dans lequel les roues arrière sont en outre rapprochées de la poutre centrale.

Ce pliage compact ne peut être effectué que lorsque le pliage intermédiaire a été effectué. Une commande spécifique peut être prévue, pour autoriser cette opération. Ainsi :
- le passage de la position dépliée à la position de pliage intermédiaire s'effectue suite à une action de l'utilisateur sur une première commande ;
- le passage de la position de pliage intermédiaire à la position pliée s'effectue suite à :
   - un premier déverrouillage « automatique » (c'est-à-dire sans intervention de l'utilisateur) obtenu par le passage dans la position de pliage intermédiaire ; et
   - un second déverrouillage, obtenu suite à une action de l'utilisateur sur une deuxième commande.

Le mode de réalisation décrit à titre d'exemple, et illustrés par les figures, concerne un châssis pliant de voiture d'enfant à trois roues sur lequel peut être monté un hamac notamment qui, pour des raisons de clarté, n'est pas illustré.

De façon générale, le châssis pliant 1 de l'invention comprend une portion, ou partie, supérieure 2, 3, 4, 5 et une portion, ou partie, inférieure présentant une poutre centrale 601 portant les roues ou blocs de roues. Selon l'invention, lors du pliage compact, la largeur de la portion inférieure est réduite (les roues arrière sont rapprochées de la poutre centrale, tout en restant parallèles entre elles), alors que la largeur de la partie supérieure reste constante, ce qui permet l'utilisation d'un siège, d'un hamac, d'une coque ou d'une nacelle non pliable en largeur. Cet élément de réception 9 d'un dispositif de transport d'enfant (non représenté) est avantageusement amovible.

La portion supérieure du châssis comprend ici un arceau avant 5 et un arceau arrière 4 reliés chacun, de manière articulée, à la poutre centrale 601. Les arceaux 4 et 5 sont en forme de U et leur solidarisation à la poutre centrale se situe sensiblement au centre du U.

Les extrémités supérieures latérales des arceaux 4 et 5 sont reliées, de manière articulée, à une embase permettant la solidarisation avec le poussoir constitué d'une portion latérale droite 2 et d'une portion latérale gauche 3. Les portions latérales droite et gauche sont reliées l'une à l'autre par une barre de poussée, ou poignée, 205.

La poutre centrale 601 présente, sur sa partie avant, un bloc de roue avant, et sur sa partie arrière, deux blocs de roues arrière situés de part et d'autre de la poutre centrale 601.

Selon l'invention, un élément de la portion supérieure, par exemple l'arceau 5, est monté mobile en rotation par rapport à la portion inférieure, autour d'un axe fixe par rapport à la poutre 601. On dispose ainsi d'une liaison simple et fiable entre les portions supérieure et inférieure, sans coulisseau monté sur la poutre.

Cet aspect est important, pour permettre de déplacer aisément la poussette, lorsqu'elle est en position pliée.

### 6.2 -Description d'un mode de réalisation particulier

### 6.2.1 - Description de la portion supérieure du châssis 1 :

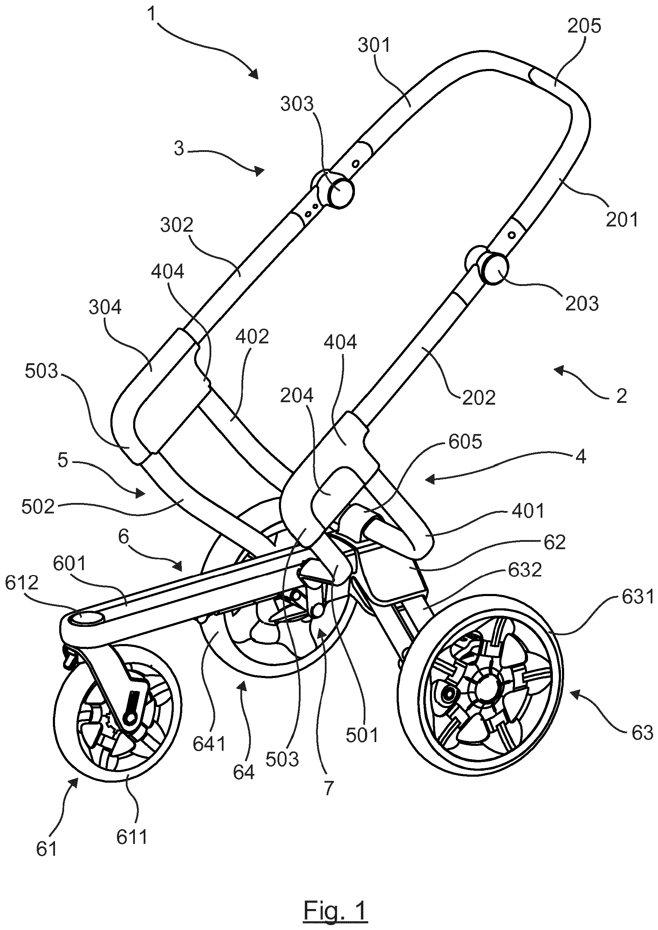

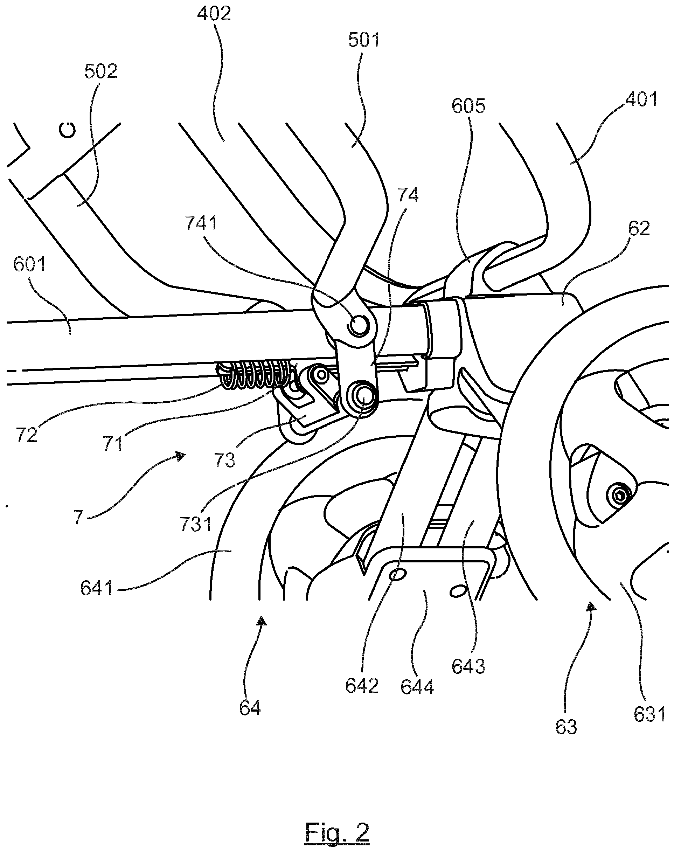

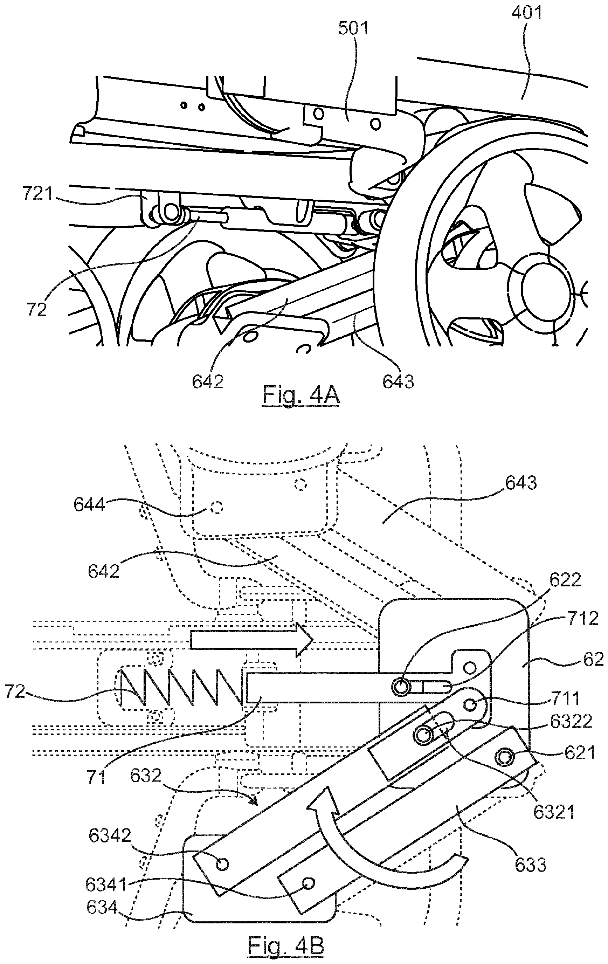

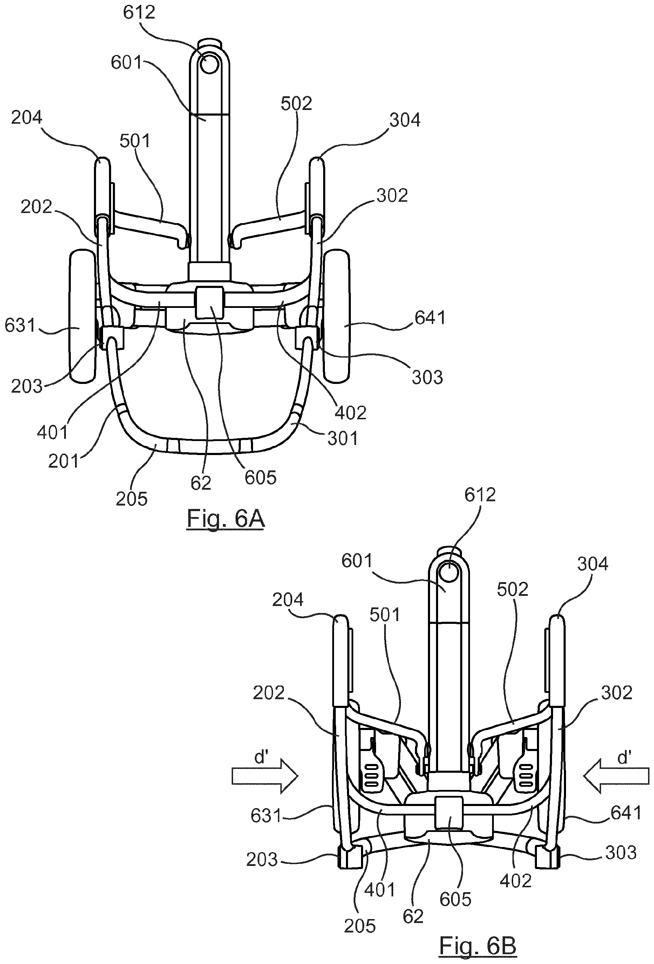

Dans ce mode de réalisation, le châssis pliant 1 de voiture d'enfant, illustré notamment sur les figures 1 à 6C, comprend une portion supérieure constituée de deux arceaux et d'un poussoir formant les moyens de guidage de la poussette.

Plus précisément, le poussoir de la portion supérieure comprend une portion latérale droite 2 et une portion latérale gauche 3, présentant chacune un montant supérieur 201, 301 prolongé par un montant inférieur 202, 302.

Les montants supérieurs 201, 301 s'étendent sensiblement parallèlement et sont reliés l'un à l'autre sur leur partie supérieure par une poignée, ou barre de poussée, 205 s'étendant sensiblement perpendiculairement aux montants supérieurs 201, 301.

La partie inférieure des montants supérieurs 201, 301 est montée articulée à une première extrémité supérieure des montants inférieurs 202, 302 par l'intermédiaire d'une liaison pivot, ou élément d'articulation, 203, 303 respectivement.

L'angle entre les montants supérieurs et inférieurs est donc réglable, ce qui permet de régler la hauteur de la poignée 205 de façon à adapter la position de cette dernière par rapport à la taille de l'utilisateur, par exemple.

Une seconde extrémité inférieure des montants inférieurs 202, 302 est montée fixe à un élément de liaison, ou embase, 204, 304 respectivement. Les embases 204, 304 relient les portions supérieures latérales 2, 3 du châssis aux portions inférieures 4, 5 du châssis.

La portion supérieure du châssis comprend également deux arceaux 4 et 5 en U constitués chacun de deux jambes en forme de L.

Plus précisément, l'arceau arrière 4 (c'est-à-dire l'arceau le plus proche des blocs de roues arrière), comprend deux jambes 401, 402 dont une première extrémité est montée pivotante sur l'embase 204, 304 respectivement par le biais d'une articulation 404.

Une deuxième extrémité des jambes 401, 402 est montée de manière pivotante sur un support central 605 situé à l'arrière de la poutre 601.

Plus précisément, les deuxièmes extrémités des jambes latérales 401, 402 sont reliées entre elles par un axe de rotation 403 (non visible) coopérant avec le support central 605. Les jambes latérales 401, 402 forment ainsi l'arceau arrière 4, centré sur le support central 605.

L'arceau avant (c'est-à-dire l'arceau le plus proche du bloc de roue avant), ou élément mobile en rotation 5, comprend deux jambes 501, 502 dont une première extrémité est montée pivotante sur l'embase 204, 304, respectivement par le biais d'une articulation 503.

Une deuxième extrémité des jambes 501, 502 est montée en rotation sur la poutre centrale 601. Les jambes latérales 501, 502 forment ainsi l'arceau avant 5 qui est centré sur la poutre centrale 601.

Les arceaux 4, 5 sont parallèles entre eux dans la positon dépliée de la poussette illustrée sur la figure 1 et centrés chacun sur la portion inférieure 6 du châssis pliant 1 de la poussette.

Les embases 204, 304 ainsi que les arceaux avant 5 et arrière 4 forment ensemble les moyens de contrôle du pliage/dépliage du châssis 1 de la poussette.

### 6.2.2 - Description de la portion inférieure 6 du châssis 1 :

Comme indiqué ci-dessus, la portion inférieure 6 du châssis 1 comprend une poutre centrale 601 présentant, à son extrémité avant, un bloc de roue 61 avant.

Le bloc de roue 61 avant porte par exemple, une ou deux roues 611, et est relié à la poutre centrale 601 par le biais d'une liaison pivot 612 permettant ainsi au bloc de roue avant 61 de pivoter de manière à suivre la direction souhaitée par l'utilisateur.

L'extrémité arrière de la poutre centrale 601 comprend un socle 62 sur lequel sont montés articulés les deux blocs de roues arrière 63 et 64. Chacun des blocs de roues arrière 63, 64 porte, par exemple, une ou deux roues 631, 641.

Contrairement au bloc de roue avant 61, les blocs de roues arrière 63, 64 ne sont pas directionnels. En d'autres mots, l'axe de rotation des roues arrière reste fixe et perpendiculaire à l'axe longitudinal de la poutre centrale 601, en position d'utilisation de la poussette, mais aussi dans toutes les positions pliées.

Dans cet exemple, chacun des blocs de roues arrière 63 et 64 est relié au socle 62 par le biais de deux bras parallèles 632, 633 et 642, 643 respectivement.

Par souci de clarté, on décrit ici la liaison entre le bloc de roue arrière gauche 63 et le châssis 1 de la poussette. On comprend que le bloc de roue arrière droit 64 est relié au châssis 1 de façon symétrique.

Plus précisément, le premier bras 633, situé le plus près de l'arrière de la poussette, est monté en rotation d'une part sur le socle 62 de la poutre centrale 601 et d'autre part sur une plateforme 634 du bloc de roue arrière 63.

Une première extrémité du premier bras 633 est montée sur le socle 62 par le biais d'une articulation 621 située sensiblement dans le coin arrière gauche du socle 62, c'est-à-dire le coin arrière situé du côté du bloc de roue arrière 63.

La deuxième extrémité du premier bras 633 est montée sur une plateforme 634 du bloc de roue arrière 63. La plateforme 634 est de forme sensiblement rectangulaire et porte une première articulation 6341, situé à l'arrière de cette dernière, sur laquelle est fixée la deuxième extrémité du premier bras 633.

Le deuxième bras 632, c'est-à-dire le bras situé le plus près de l'avant de la poussette, est de longueur variable. En effet, le bras 632 est constitué de deux parties 632a et 632b qui sont mobiles en translation l'une par rapport à l'autre. Pour ce faire, la partie 632a du bras 632 comprend, à une première extrémité, un pion de guidage 6322 apte à coopérer avec une lumière oblongue 6321 définie dans la partie 632b du bras 632. Cette lumière oblongue 6321 s'étend longitudinalement et est située sensiblement au centre de la partie 632a du bras 632.

La course de déplacement entre les deux parties du bras 632 est adaptée de façon à assurer un mouvement du bras permettant un pliage optimal du châssis.

La deuxième extrémité de la partie 632b du bras est montée de manière articulée sur la plateforme 634 par l'intermédiaire d'une deuxième articulation 6342, située à l'avant de la plateforme 634.

Un élément coulissant 71 parallèlement à la poutre 601, assure un premier blocage / déblocage, empêchant ou autorisant le pliage des roues arrière, c'est-à-dire la déplacement en rotation des bras.631 et 632, comme expliqué par la suite.

De façon symétrique par rapport à la poutre centrale 601, le bloc de roue arrière 64 est relié, par l'intermédiaire de la plateforme 644, au socle 62 et à l'élément coulissant 71 par le biais de deux bras 643 et 642 présentant la même structure que les bras 633 et 632.

### 6.2.3 - Description de la séquence de pliageldépliage du châssis 1 :

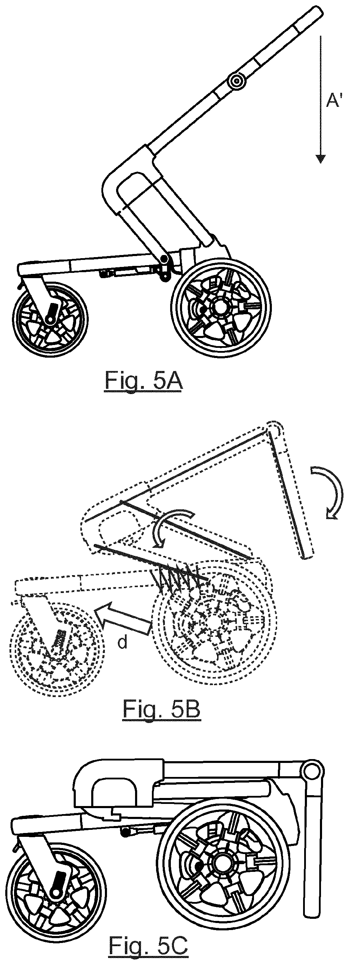

Les figures 5A à 5C illustrent différentes étapes du premier pliage, intermédiaire (c'est-à-dire de la partie supérieure), de la poussette qui s'effectue en une seule manœuvre, la poussette étant dans une configuration dépliée sur la figure 5A et dans une configuration pliée sur la figure 5C.

L'amorce du pliage, c'est-à-dire le passage de la configuration illustrée par la figure 5A (poussette totalement dépliée) à celle illustrée par la figure 5B (pliage amorcé), est obtenu en repliant manuellement les portions supérieures de châssis 2, 3 vers le bas, autour des articulations 404 des embases 204, 304, conformément à la direction indiquée par la flèche A'.

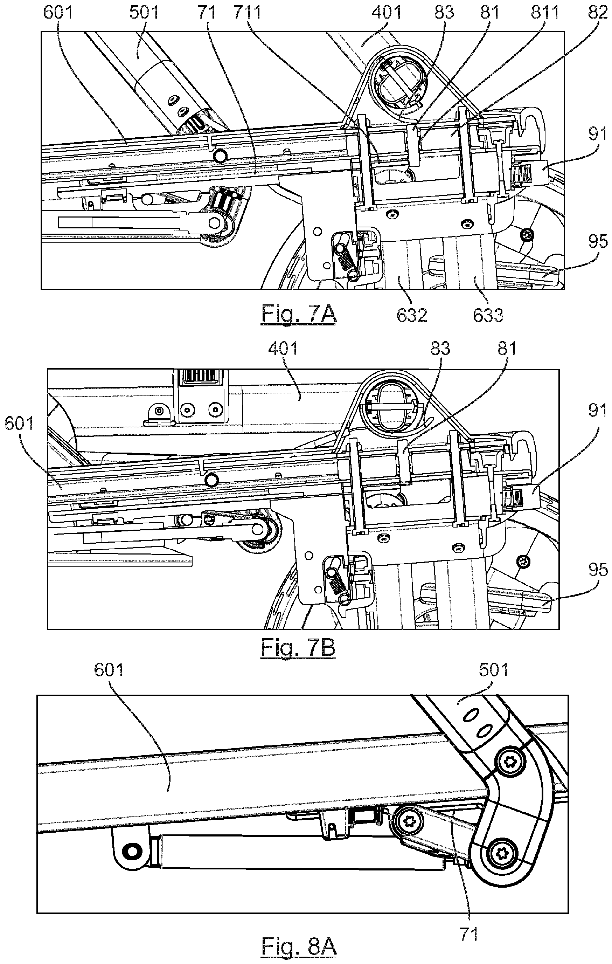

Une première commande de déverrouillage peut être prévue, par exemple au niveau du guidon, pour permettre ce pliage. Dans le mode de réalisation illustré, cette commande se présente sous la forme d'une pédale 95 (visible sur les figures 7A et 7B), notamment telle que décrite dans le document FR3038285, incorporé par référence. Dans ce cas, le pliage intermédiaire peut être obtenu sans autre action que le déverrouillage assuré à l'aide de la pédale 95.

À mesure que les portions supérieures de châssis 2, 3 sont repliées vers le bas (figure 5B) par l'utilisateur et par un élément 72 d'assistance au pliage, tel qu'un vérin, les embases 204, 304 se déplacent vers la poutre centrale 601 tout en pivotant légèrement dans le sens horaire.

Ce déplacement des embases 204, 304 entraîne la rotation des arceaux 4, 5 vers l'avant. Plus précisément, les jambes latérales 401, 402, 501, 502 pivotent vers la poutre centrale 601, dans le sens antihoraire.

En conséquence, les leviers 74 pivotent dans le sens antihoraire autour de l'axe 741 et entrainent, dans le même sens, l'entretoise 73 en rotation. Ce déplacement de l'entretoise autorise la translation de l'élément coulissant 71 vers l'arrière de la poussette et assure donc un premier déverrouillage des blocs de roues arrière 63, 64.

En position pliée intermédiaire ou compacte, comme illustré à la figure 5C, les portions supérieures 2, 3 sont totalement abaissées.

On note que les montants inférieurs 202, 302 sont alors repliés sur l'arceau arrière 4 qui est lui-même replié sur la poutre centrale 601.

Dans cette position, les montants inférieurs 202, 302, les embases 204, 304 et l'arceau arrière 4 sont sensiblement parallèles à la poutre centrale 601.

En complément, la configuration des bras 632, 633 et 642, 643 permet de rapprocher les blocs de roues arrière dans deux autres directions, à savoir vers l'intérieur de la poussette ou poutre centrale 601 (les blocs de roues arrière 63, 64 se rapprochant autour de la poutre centrale 601), pour obtenir le pliage compact optionnel. Tout au long de ce pliage, les roues arrière restent parallèles.

Il est possible, en toute fin de pliage intermédiaire et/ou compact, de faire pivoter manuellement ou automatiquement les montants supérieurs 201, 301, portant la poignée 205, vers les blocs de roues arrière 63, 64 de manière à optimiser davantage le volume de la poussette dans sa position pliée.

### 6.2.4 Verrouillage / déverrouillage des bras de support des roues arrière

On décrit maintenant, à l'aide des figures 7A à 11B, le passage du pliage intermédiaire au pliage compact, c'est-à-dire le rapprochement des roues arrière de la poutre, et en particulier le verrouillage et le déverrouillage de cette opération.

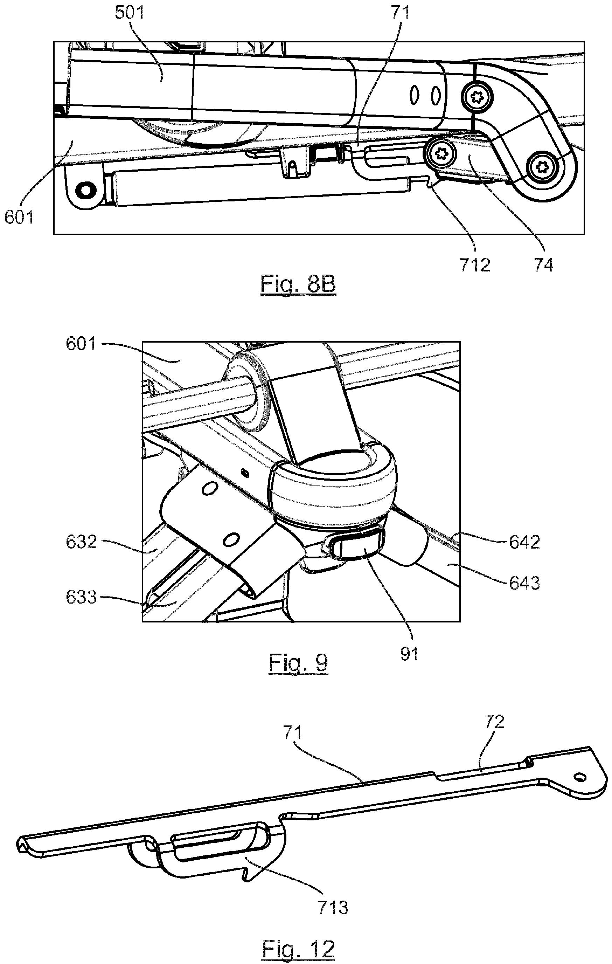

En effet, il est souhaitable non seulement, bien sûr, que cette opération ne puisse être effectuée que suite à une action volontaire de l'utilisateur sur une commande spécifique pour le pliage des roues arrière (bouton de déverrouillage 91, figure 9, placé à l'arrière de la poutre par exemple), mais également que lorsque la partie supérieure du châssis est pliée (pion de verrouillage 81).

Ainsi, lorsque la poussette est dépliée, les bras 632 et 633 sont bloqués en rotation par rapport à la poutre 601, et deux actions de déverrouillage successifs sont nécessaires :
- une première, assurée par le pliage intermédiaire du châssis ; et
- une seconde, effectuée par l'utilisateur.

En d'autres termes, on peut distinguer le pliage de la partie supérieure et le pliage de la partie inférieure (rapprochement des roues). Le pliage intermédiaire correspond au pliage de la partie supérieure. Le pliage complet, ou compact, correspond au pliage de la partie inférieure. Ce dernier ne peut se faire que si le pliage intermédiaire a préalablement été effectué. Le premier verrouillage assure que le pliage des roues arrière ne peut pas être actionnée par inadvertance, notamment lorsqu'un enfant est présent dans la poussette.

Comme on le voit sur les vues en coupe partielle des figures 7A et 7B, la poutre 601 porte, dans la zone de liaison avec les bras 632 et 633, un pion mobile 81, monté sur une platine centrale 82, et empêchant le déplacement en coulissement de l'élément 71 (figure 7A). Cet élément 71 étant lié, au niveau de sa partie d'extrémité au bras 632, par un pivot 711, ce bras 632 ne peut donc pas être déplacé en rotation.

Lors du pliage intermédiaire, c'est-à-dire le pliage dans la partie supérieure, les jambes latérales 401 et 501 sont déplacées en rotation, pour venir se placer sensiblement parallèlement à la poutre 601 (figure 7B).

La base de la jambe 401 porte un excentrique 83, qui agit sur le pion 81, pour le maintenir dans sa position de verrouillage (figure 7A), lorsque le châssis est déplié. Dans cette position l'extrémité arrière de la pièce 71 est en butée sur le pion 81 et ainsi les bras arrière 632 et 633, dont le mouvement est lié à la pièce 71, ne peuvent pas être repliés. La rotation de la jambe 401 lors du pliage entraîne le déplacement de cet excentrique 83 (figure 7B), autorisant la remontée du pion 81, par exemple sous l'effet d'un ressort de rappel 811.

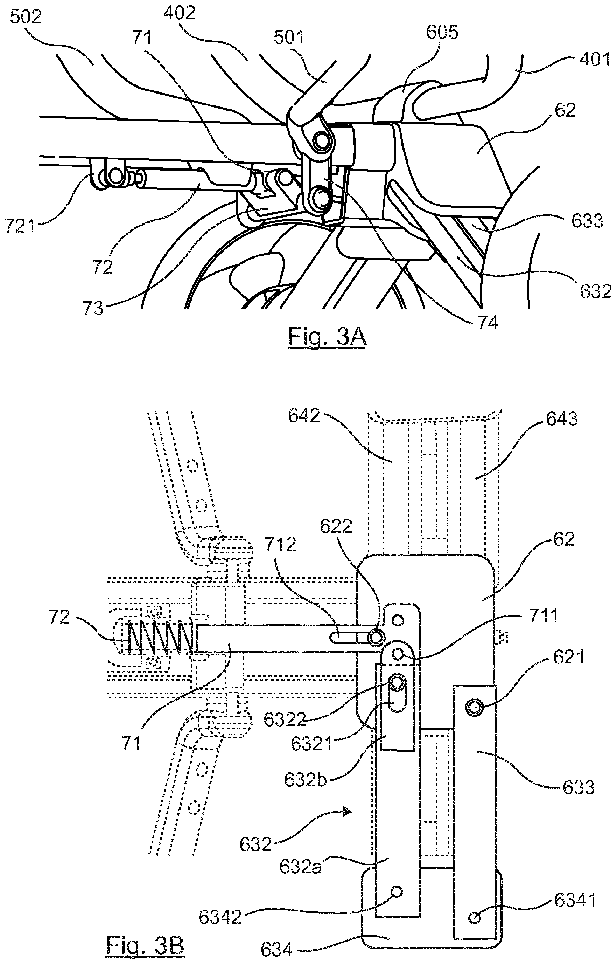

Dans le même temps, l'élément 71, liée au bras 632, se déplace vers l'arrière de la poussette. La forme de cet élément, ou bielle, 71 selon ce mode de réalisation est illustrée sur la figure 12. Comme on le voit également sur les figures 3A, 3B, 8A et 8B, cet élément 71 peut se déplacer le long de la poutre 601. Son coulissement est contrôlé par une lumière oblongue 712, dans laquelle se déplace un pion 622 solidaire du socle 62. Le pivot 711 se déplace selon le coulissement, pendant que le bras 632 pivote autour du pion 6322.

Il porte également un crochet 713, qui permet de maintenir les roues dans la position pliée compacte.

Pendant le pliage intermédiaire, la bielle 71 ne se déplace pas. La lumière oblongue 712 assure la désynchronisation temporaire entre les pliages supérieur et inférieur. Lors du pliage inférieur, ou pliage des roues arrière, la bielle 71 recule pendant que les bras 632 et 633 sont déplacés, pour passer de la position illustrée en traits pleins à la position illustrée en pointillés, sur la figure 8B.

Une fois que le pliage intermédiaire est effectué (les premiers moyens de blocage étant donc déverrouillés), l'utilisateur peut réaliser le pliage des roues arrière (c'est-à-dire le passage de la position de pliage intermédiaire à la position de pliage compacte), s'il le souhaite.

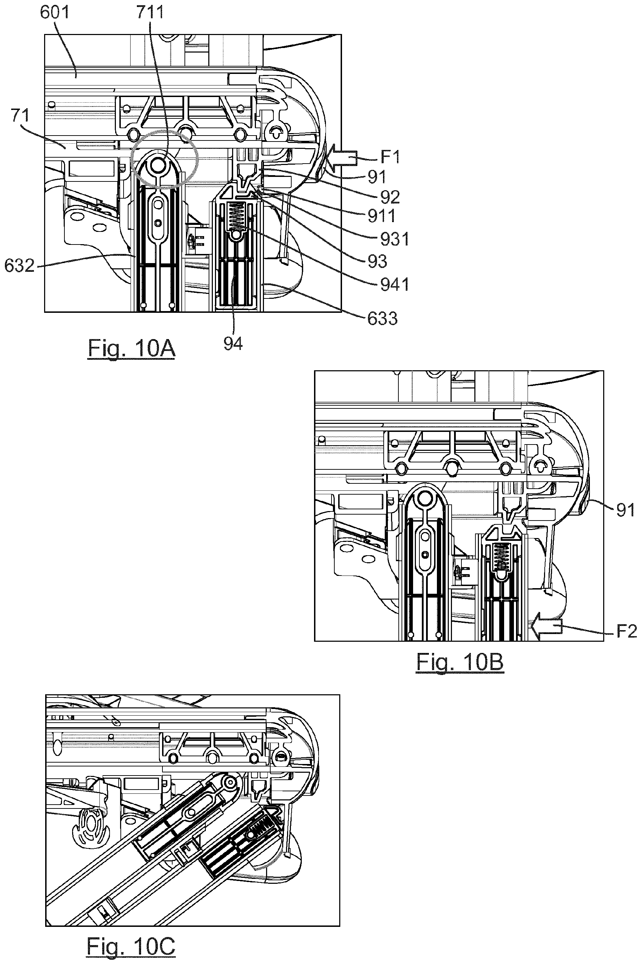

Pour ceci, il appuie sur le bouton de déverrouillage 91, placé ici à l'arrière de la poutre, pour qu'il soit aisément accessible. L'appui F1 sur ce bouton assure le déverrouillage d'un verrou agissant sur le deuxième bras 633, comme illustré sur les figures 10A à 10C.

Dans ce mode de réalisation, le verrou comprend un pêne 92 fixe par rapport à la poutre 601, et une gâche mobile 93, solidaire du bras 633. Cette gâche 92 est montée sur une pièce mobile 94, pouvant coulisser à l'intérieur du bras 633. Un ressort de rappel 941 tend à ramener cette pièce 94 en position verrouillée (figure 10A).

L'appui F1 sur le bouton 91 entraîne le déplacement d'une rampe, ou plan incliné, 911 formée dans le prolongement de celui-ci, et qui coopère avec une rampe, ou plan incliné, complémentaire 931 formé sur la gâche 93. Ainsi, en enfonçant le bouton 91, la gâche 93, et plus généralement la pièce 94 sont déplacées à l'intérieur du bras 633 (figure 10B).

Dans cette position, le pêne 92 et la gâche 93 sont déverrouillés. En poussant sur le bras 633 (flèche F2) l'utilisateur peut faire pivoter en rotation les deux bras 632 et 633, et ramener ainsi les roues arrière à proximité de la poutre centrale.

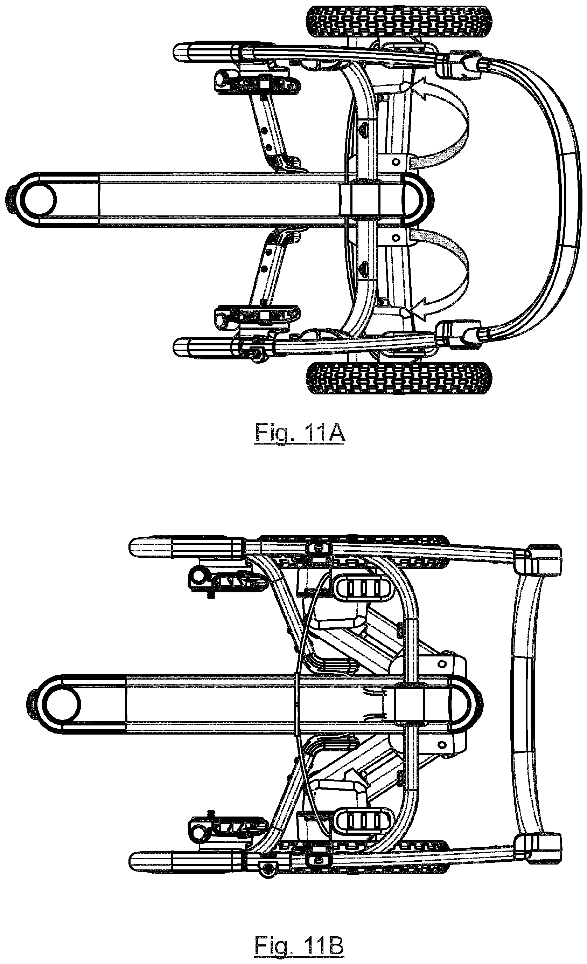

Ainsi, comme on le voit sur les figures 11A et 11B, présentant le châssis de poussette vue de dessus, respectivement dans la position dépliée et dans la position pliée compacte, la largeur totale du châssis est réduit dans la position pliée compacte (figure 11B), les roues arrière 63, 64 se trouvant alors dans le plan vertical définit par les poussoirs 202 et 302.

Dans cette position pliée compacte, le crochet 711 (figure 8B) de la pièce mobile en coulissement 71 coopère avec un élément d'accrochage (non représenté) prévu à cet effet sur l'extrémité du bras 632, pour retenir ce bras, et donc la roue arrière dans la position pliée compact.

Lors du dépliage, si la poussette est en position de pliage intermédiaire, le pêne 92 et la gâche 93 sont restés verrouillés, et le déplacement en rotation de la jambe 401 entraine le verrouillage du pion 82, par l'intermédiaire de la lame ressort 83 (voir figure 7A).

Si la poussette était dans la position de pliage compacte, la pièce coulissante 71, entraînée en coulissement vers l'avant par la rotation de la jambe 501, via la biellette 74, entraîne tout d'abord le déplacement du crochet 711, qui retenait les roues arrière en position pliée, puis le retour en position dépliée (sensiblement perpendiculaire à la poutre 601) du bras 632, et simultanément du bras 633, dont la gâche 93 vient se verrouiller au penne 92, sous l'action des moyens de rappel 941.

## Revendications

1. Châssis pliant de poussette pour enfant, comprenant :
- une partie supérieure présentant des moyens de réception (9) d'une assise et des moyens de guidage (205) de ladite poussette, ladite partie supérieure pouvant prendre une position de partie supérieure dépliée et une position de partie supérieure pliée, et
- une partie inférieure (6) présentant une poutre centrale (601) portant au moins une roue avant et deux roues arrière, dont les supports (63, 64) respectifs sont reliés chacun à ladite poutre centrale (601) par un ensemble de deux bras parallèles (632, 633 ; 642, 643), articulés sur ladite poutre centrale de façon à pouvoir prendre une position de roues arrière dépliée et une position de roues arrière pliée, dans laquelle lesdites roues arrière sont rapprochées de ladite poutre,
**caractérisé en ce qu'**il comprend des premiers moyens (81, 83) de blocage du pliage de ladite partie inférieure, contrôlés par le pliage de ladite partie supérieure, de façon que le passage de la position de roues arrière dépliée à la position de roues arrière pliée ne soit possible que lorsque ladite partie supérieure est dans la position de partie supérieure pliée.

2. Châssis selon la revendication 1, **caractérisé en ce que** ladite partie supérieure présente au moins un ensemble (5) mobile en rotation autour d'un axe de rotation fixe par rapport à ladite poutre centrale (601), et contrôlant le déplacement en coulissement d'au moins une pièce (71) mobile en coulissement le long de ladite poutre (601) et coopérant avec au moins un premier desdits bras (632, 642).

3. Châssis selon la revendication 2, **caractérisé en ce que** ladite pièce (71) mobile en coulissement porte un crochet (711), retenant un desdits bras et/ou une desdites roues arrière dans la position de roues arrière pliée.

4. Châssis selon l'une quelconque des revendications 1 à 3, **caractérisé en ce que** lesdits premiers moyens de blocage comprennent un pion de verrouillage (81) apte à s'opposer au déplacement d'un desdits bras (632, 642), lorsque ladite partie supérieure est dans la position de partie supérieure dépliée.

5. Châssis selon la revendication 4, **caractérisé en ce que** le déplacement dudit pion de verrouillage (81) d'une position verrouillée à une position déverrouillée est contrôlée par la rotation d'une jambe (401) de ladite partie supérieure.

6. Châssis selon la revendication 5, **caractérisé en ce que** ladite jambe (401) entraîne en déplacement un excentrique (83) agissant sur ledit pion de verrouillage (81).

7. Châssis selon l'une quelconque des revendications 1 à 6, **caractérisé en ce qu'**au moins un desdits bras (632, 642) est de longueur variable.

8. Châssis selon la revendication 7, **caractérisé en ce que** ledit premier bras (632) est constitué de deux éléments (632a, 632b, 642a, 642b) aptes à coulisser l'un par rapport à l'autre, le pliage et/ou le dépliage de la partie supérieure du châssis entraînant le coulissement des deux éléments l'un par rapport à l'autre.

9. Châssis selon l'une quelconque des revendications 1 à 8, **caractérisé en ce qu'**il comprend des seconds moyens (92, 93) de blocage de la rotation d'un desdits bras, contrôlés par des moyens (91) de déverrouillage actionnables par un utilisateur.

10. Châssis selon la revendication 9, **caractérisé en ce que** lesdits seconds moyens de blocage comprennent un pêne (92) monté sur ladite poutre, et coopérant avec une gâche (93) formée sur ledit bras.

11. Châssis selon la revendication 10, **caractérisé en ce que** ledit pêne (92) est fixe et **en ce que** ladite gâche (93) coulisse à l'intérieur dudit bras.

12. Châssis selon l'une quelconque des revendications 9 à 11, **caractérisé en ce que** lesdits moyens de déverrouillage comprennent un bouton (91) mobile monté sur ladite poutre.

13. Châssis selon la revendication 12, **caractérisé en ce que** ledit bouton (91) est accessible à l'arrière de ladite poutre.

14. Châssis selon les revendications 10 et 12, **caractérisé en ce que** ledit bouton (91) entraine en déplacement un premier plan incliné (911) coopérant avec un second plan incliné (931), complémentaire, solidaire de ladite gâche.

15. Poussette pour enfant **caractérisé en ce qu'**il comprend un châssis pliant selon l'une quelconque des revendications 1 à 14, et au moins un dispositif de transport d'enfant monté sur ladite partie supérieure dudit châssis.

## Patentansprüche

1. Zusammenklappbares Gestell für einen Kinderwagen, das umfasst:
- ein Oberteil, das Mittel zur Aufnahme (9) einer Sitzfläche und Mittel zum Führen (205) des Kinderwagens aufweist, wobei das Oberteil eine aufgeklappte Position des Oberteils und eine zusammengeklappte Position des Oberteils einnehmen kann, und
- ein Unterteil (6), das einen zentralen Träger (601) aufweist, der mindestens ein Vorderrad und zwei Hinterräder trägt, deren jeweilige Halter (63, 64) jeweils mit dem zentralen Träger (601) verbunden sind, durch eine Anordnung aus zwei parallelen Armen (632, 633; 642, 643), die auf dem zentralen Träger so schwenkbar gelagert sind, dass sie eine aufgeklappte Position der Hinterräder und eine zusammengeklappte Position der Hinterräder einnehmen können, in welcher die Hinterräder näher an den Träger herangeholt werden,
**dadurch gekennzeichnet, dass** es erste Mittel (81, 83) zum Blockieren des Zusammenklappens des Unterteils umfasst, die durch das Zusammenklappen des Oberteils gesteuert werden, so dass der Übergang von der aufgeklappten Position der Hinterräder in die zusammengeklappte Position der Hinterräder nur möglich ist, wenn sich das Oberteil in der zusammengeklappten Position des Oberteils befindet.

2. Gestell nach Anspruch 1, **dadurch gekennzeichnet, dass** das Oberteil mindestens eine Anordnung (5) aufweist, die um eine feststehende Drehachse in Bezug auf den zentralen Träger (601) drehbeweglich ist, und die Gleitbewegung von mindestens einem entlang des Trägers (601) verschiebbaren Teil (71) steuert und mit mindestens einem ersten der Arme (632, 642) zusammenwirkt.

3. Gestell nach Anspruch 2, **dadurch gekennzeichnet, dass** das verschiebbare Teil (71) einen Haken (711) trägt, der einen der Arme und/oder eines der Hinterräder in der zusammengeklappten Position der Hinterräder hält.

4. Gestell nach einem der Ansprüche 1 bis 3, **dadurch gekennzeichnet, dass** die ersten Mittel zum Blockieren einen Verriegelungsstift (81) umfassen, der geeignet ist, der Verschiebung eines der Arme (632, 642) entgegenzuwirken, wenn sich das Oberteil in der aufgeklappten Position des Oberteils befindet.

5. Gestell nach Anspruch 4, **dadurch gekennzeichnet, dass** die Verschiebung des Verriegelungsstifts (81) aus einer verriegelten Position in eine entriegelte Position durch Drehen eines Beinelements (401) des Oberteils gesteuert wird.

6. Gestell nach Anspruch 5, **dadurch gekennzeichnet, dass** das Beinelement (401) ein Exzenter (83) in Bewegung setzt, das auf den Verriegelungsstift (81) einwirkt.

7. Gestell nach einem der Ansprüche 1 bis 6, **dadurch gekennzeichnet, dass** mindestens einer der Arme (632, 642) eine variable Länge hat.

8. Gestell nach Anspruch 7, **dadurch gekennzeichnet, dass** der erste Arm (632) aus zwei Elementen besteht (632a, 632b, 642a, 642b), die geeignet sind, sich zueinander zu verschieben, wobei das Zusammenklappen und/oder das Auseinanderklappen des Oberteils des Gestells die Verschiebung der beiden Elemente zueinander herbeiführt.

9. Gestell nach einem der Ansprüche 1 bis 8, **dadurch gekennzeichnet, dass** es zweite Mittel (92, 93) zum Blockieren der Drehung eines der Arme umfasst, die durch Mittel (91) zum Entriegeln, die von einem Benutzer betätigt werden können, gesteuert werden.

10. Gestell nach Anspruch 9, **dadurch gekennzeichnet dass** die zweiten Mittel zum Blockieren einen Riegel (92) umfassen, der auf dem Träger angebracht ist, und mit einer auf dem Arm ausgebildeten Schließfalle (93) zusammenwirkt.

11. Gestell nach Anspruch 10, **dadurch gekennzeichnet, dass** der Riegel (92) fest ist, und dadurch, dass die Schließfalle (93) in das Innere des Arms gleitet.

12. Gestell nach einem der Ansprüche 9 bis 11, **dadurch gekennzeichnet, dass** die Mittel zum Entriegeln einen beweglichen Knopf (91) umfassen, der auf dem Träger angebracht ist.

13. Gestell nach Anspruch 12, **dadurch gekennzeichnet, dass** der Knopf (91) auf der Rückseite des Trägers zugänglich ist.

14. Gestell nach Anspruch 10 und 12, **dadurch gekennzeichnet, dass** der Knopf (91) die Verschiebung einer ersten schrägen Fläche (911) herbeiführt, die mit einer komplementären, zweiten schrägen Fläche (931) zusammenwirkt, die mit der Schließfalle fest verbunden ist.

15. Kinderwagen, **dadurch gekennzeichnet, dass** er ein zusammenklappbares Gestell nach einem der Ansprüche 1 bis 14 und mindestens eine Vorrichtung zum Kindertransport, die auf dem Oberteil des Gestells angebracht ist, umfasst.

## Claims

1. Folding frame of a child's pushchair, comprising:
- an upper portion having means for receiving (9) a seat and means for guiding (205) said pushchair, said upper portion able to have a position with the upper portion unfolded and a position with the upper portion folded, and
- a lower portion (6) having a central beam (601) carrying at least one front wheel and two rear wheels, of which the respective supports (63, 64) are each connected to said central beam (601) by a set of two parallel arms (632, 633; 642, 643), articulated on said central beam in such a way as to be able to have a position with the rear wheels unfolded and a position with the rear wheels folded, wherein said rear wheels are brought closer to said beam,
**characterised in that** it comprises first means (81, 83) for blocking the folding of said lower portion, controlled by the folding of said upper portion, in such a way that the passing from the unfolded position of the rear wheels to the folded position of the rear wheels is possible only when said upper portion is in the folded position of the upper portion.

2. Frame according to claim 1, **characterised in that** said upper portion has at least one assembly (5) mobile in rotation about a fixed axis of rotation with respect to said central beam (601), and controlling the displacement in sliding of at least one part (71) mobile in sliding along said beam (601) and cooperating with at least one first of said arms (632, 642).

3. Frame according to claim 2, **characterised in that** said part (71) mobile in sliding carries a hook (711), retaining one of said arms and/or one of said rear wheels in the folded position of the rear wheels.

4. Frame according to any of claims 1 to 3, **characterised in that** said first means for blocking comprise a locking pin (81) able to oppose itself to the displacement of one of said arms (632, 642), when said upper portion is in the unfolded position of the upper portion.

5. Frame according to claim 4, **characterised in that** the displacement of said locking pin (81) from a locked position to an unlocked position is controlled by the rotation of a leg (401) of said upper portion.

6. Frame according to claim 5, **characterised in that** said leg (401) drives in displacement an eccentric drive (83) acting on said locking pin (81).

7. Frame according to any of claims 1 to 6, **characterised in that** at least one of said arms (632, 642) is of a variable length.

8. Frame according to claim 7, **characterised in that** said first arm (632) is constituted of two elements (632a, 632b, 642a, 642b) able to slide with respect to one another, with the folding and/or the unfolding of the upper portion of the frame driving the sliding of the two elements with respect to one another.

9. Frame according to any of claims 1 to 8, **characterised in that** it comprises second means (92, 93) for blocking the rotation of one of said arms, controlled by means (91) for unlocking that can be actuated by a user.

10. Frame according to claim 9, **characterised in that** said second means for blocking comprise a bolt (92) mounted on said beam, and cooperating with a latch (93) formed on said arm.

11. Frame according to claim 10, **characterised in that** said bolt (92) is fixed and **in that** said latch (93) slides inside said arm.

12. Frame according to any of claims 9 to 11, **characterised in that** said means for unlocking comprise a mobile button (91) mounted on said beam.

13. Frame according to claim 12, **characterised in that** said button (91) is accessible at the rear of said beam.

14. Frame according to claims 10 and 12, **characterised in that** said button (91) drives in displacement a first inclined plan (911) that cooperates with a second inclined plane (931), complementary, integral with said latch.

15. Child's pushchair **characterised in that** it comprises a folding frame according to any of claims 1 to 14, and at least one device for transporting a child mounted on said upper portion of said frame.
